# EUROPEAN PATENT APPLICATION

(11) **EP 4 369 182 A1**
(43) Date of publication of application: **15.05.2024**
(21) Application number: 23209091.0
(22) Date of filing: 10.11.2023
(51) Int. Cl.: G06F 8/65, G06F 9/50

(54) **OTA UPGRADE METHOD AND APPARATUS, ELECTRONIC DEVICE, MEDIUM, AND VEHICLE**

(30) Priority: 11.11.2022 CN 202211414393
(71) Applicant: Nio Technology (Anhui) Co., Ltd, Hefei City, Anhui 230601 (CN)
(72) Inventor: LUO, Tao, Hefei City, 230601 (CN)
(74) Representative: v. Bezold & Partner Patentanwälte - PartG mbB

(57) **Abstract**

The disclosure provides an OTA upgrade method and apparatus, an electronic device, a medium, and a vehicle, to solve a problem that safe driving is affected or OTA upgrade is slow due to OTA services occupying too many or too few system resources. The OTA upgrade method includes: before an OTA upgrade operation is performed, obtaining current usages of all system resources; allocating an OTA service quota to each of the system resources based on the current usages of all the system resources; and performing the OTA upgrade operation, and when the OTA upgrade operation is performed, controlling each of the system resources used in OTA upgrade to not exceed the corresponding OTA service quota. A percentage of various system resources occupied by OTA upgrade is accurately controlled to improve the reliability of vehicle OTA and the safety of vehicle traveling.

## Description

### TECHNICAL FIELD

The disclosure relates to the technical field of OTA services, and specifically provides an OTA upgrade method and apparatus, an electronic device, a medium, and a vehicle.

### BACKGROUND

Currently, more and more smart vehicle manufacturers are using the over-the-air (OTA) technology to perform remote upgrade and data update on vehicles. There are also various upgrade methods. However, as software packages upgraded through OTA become larger and larger, and an amount of the upgraded content even reaches more than 10 GB, the difficulty of online upgrade increases.

In the existing technology, one of the solutions is to compress a software package upgraded through OTA on the service side, then silently download, verify and decompress the software package on the vehicle, and then flush the software package locally to complete the software upgrade. However, the silent downloading, verification, and decompression may consume a large number of system resources. If the system resources are being used by other services in this case, such as Advanced Driving Assistance System (ADAS) services that are running, then OTA downloading, verification, and decompression may inevitably affect the ADAS services, thereby affecting the safe traveling of a vehicle.

In an OTA upgrade process, when the system is busy, if an OTA service occupies too many system resources, it may have some impact on the safe traveling of the vehicle; and when the system is idle, if the OTA service occupies too few system resources, it will be difficult to complete the OTA upgrade quickly. Therefore, how to allow a user to perform OTA upgrade conveniently, quickly, and safely has become an urgent problem to be solved.

Accordingly, there is a need for a novel vehicle OTA upgrade solution to solve the above problem in the art.

### SUMMARY

To overcome the above defect, the disclosure is proposed to provide an OTA upgrade method and apparatus, an electronic device, a medium, and a vehicle, to solve or at least partially solve a problem that safe driving is affected or OTA upgrade is slow due to OTA services occupying too many or too few system resources.

According to a first aspect, the disclosure provides an OTA upgrade method, including: before an OTA upgrade operation is performed, obtaining current usages of all system resources; allocating an OTA service quota to each of the system resources based on the current usages of all the system resources; and performing the OTA upgrade operation, and when the OTA upgrade operation is performed, controlling each of the system resources used in OTA upgrade to not exceed the corresponding OTA service quota.

In a technical solution of the above OTA upgrade method, the method further includes: during the OTA upgrade operation, performing the following steps in a loop until the OTA upgrade is completed: obtaining latest usages of all the system resources at an interval of a preset time t, re-allocating an OTA service quota to each of the system resources based on the latest usage of each of the system resources, and performing an OTA upgrade operation again based on the re-allocated OTA service quota.

In a technical solution of the above OTA upgrade method, the obtaining current usages of system resources includes: obtaining current usages of a CPU, IO, a memory, and a network.

In a technical solution of the above OTA upgrade method, the allocating an OTA service quota to each of the system resources based on the current usages of all the system resources includes: obtaining a percentage N of each of the system resources currently used by another service and a preset maximum use ratio L of each of the system resources; and determining an OTA service quota M of each of the system resources based on the percentage N of each of the system resources currently used by the another service and the maximum use ratio L.

In a technical solution of the above OTA upgrade method, the determining an OTA service quota M of each of the system resources based on the percentage N of each of the system resources currently used by the another service and the maximum use ratio L includes: determining a maximum value of the OTA service quota M of each of the system resources based on an absolute value of a difference between the percentage N of each of the system resources currently used by the another service and the maximum use ratio L, so that the OTA service quota M is less than or equal to the absolute value of the difference between the percentage N of each of the system resources currently used by the another service and the maximum use ratio L.

In a technical solution of the above OTA upgrade method, the re-allocating an OTA service quota to each of the system resources based on the usage of each of the system resources includes: when a percentage of each of the system resources used by another service increases, decreasing the OTA service quota of the system resource; and when the percentage of the system resource used by the another service decreases, increasing the OTA service quota of the system resource.

According to a second aspect, there is provided an OTA upgrade apparatus, including: an obtaining module configured to: before an OTA upgrade operation is performed, obtain current usages of all system resources; an allocation module configured to allocate an OTA service quota to each of the system resources based on the current usages of all the system resources; and an upgrade module configured to perform the OTA upgrade operation, and control each of the system resources used in OTA upgrade to not exceed the corresponding OTA service quota.

According to a third aspect, there is provided an electronic device. The electronic device includes a processor and a memory adapted to store a plurality of pieces of program code, where the pieces of program code are adapted to be loaded and run by the processor to perform the OTA upgrade method according to any one of the technical solutions of the above OTA upgrade method.

According to a fourth aspect, there is provided a computer-readable storage medium. A plurality of pieces of program code are stored in the computer-readable storage medium, and the pieces of program code are adapted to be loaded and run by a processor to perform the OTA upgrade method according to any one of the technical solutions of the above OTA upgrade method.

According to a fifth aspect, there is provided a vehicle including a vehicle body and the above electronic device.

The above one or more technical solutions of the disclosure have at least one or more of the following beneficial effects:

In the technical solutions for implementing the disclosure, the OTA upgrade operation is performed by obtaining the current usages of the system resources and allocating the OTA service quota to each of the system resources based on the current usages of the system resources. This ensures that when the OTA upgrade operation is performed, each of the system resources that is used does not exceed the corresponding OTA service quota, thereby preventing the OTA upgrade from affecting driving safety by occupying too many system resources, and preventing the OTA upgrade from affecting the upgrade speed by occupying too few system resources.

In the technical solutions for implementing the disclosure, the OTA service quota of the system resource is determined based on the percentage of each of the system resources currently used by the another service and the maximum use ratio, so as to accurately control the percentage of system resources occupied by OTA upgrade, and further improve the reliability of vehicle OTA and the safety of vehicle traveling.

In the technical solutions for implementing the disclosure, the usage of the system resource is checked at an interval of the time t, and the OTA service quota is reallocated. The OTA service quota of each system resource is dynamically adjusted in a timely manner to ensure that when other services occupy a large number of system resources, the ratio of system resources occupied by the OTA upgrade is decreased and the safe traveling of the vehicle is ensured, and when other services occupy a small number of system resources, the ratio of system resources occupied by the OTA upgrade is increased, to improve the efficiency of the OTA upgrade, shorten the OTA upgrade cycle of the vehicle, improve the convenience of the OTA upgrade, and further improve the reliability of vehicle OTA and the safety of vehicle traveling.

### BRIEF DESCRIPTION OF DRAWINGS

The disclosed content of the disclosure will become more readily understood with reference to the accompanying drawings. Those skilled in the art readily understand that these accompanying drawings are merely for illustrative purposes and are not intended to limit the scope of protection of the disclosure. In addition, similar components are represented by similar numbers in the figures, in which:
FIG. 1 is a schematic flowchart of main steps of an OTA upgrade method according to an embodiment of the disclosure;
FIG. 2 is a schematic flowchart of main steps of an OTA service quota allocation method according to an embodiment of the disclosure;
FIG. 3 is a schematic block diagram of a main structure of an OTA upgrade apparatus according to an embodiment of the disclosure; and
FIG. 4 is a block diagram of a main structure of an electronic device configured to perform an OTA upgrade method according to the disclosure.

### DESCRIPTION OF EMBODIMENTS

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

As described in the Background Art section, the disclosure provides an OTA upgrade method and apparatus, an electronic device, a medium, and a vehicle, to solve the problem that in the existing OTA upgrade operation, an OTA service occupies system resources and affects the safe traveling of a vehicle.

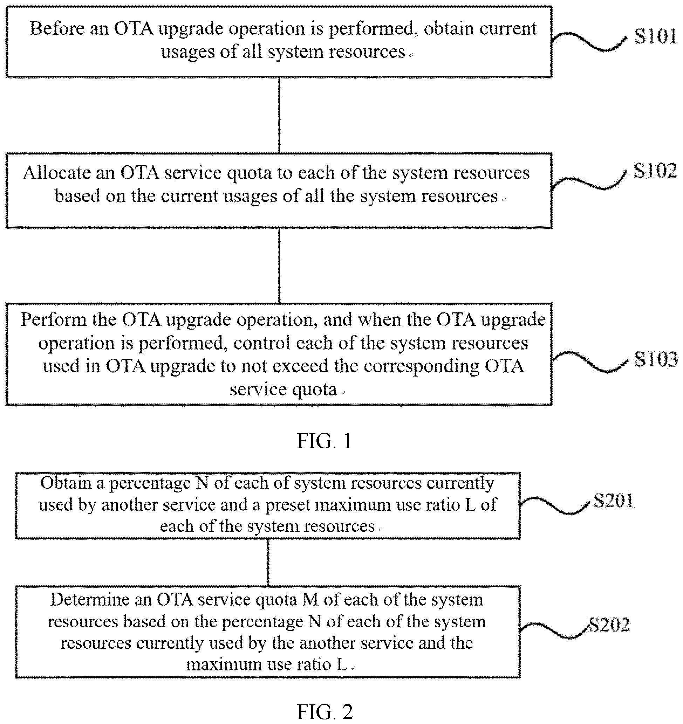

FIG. 1 is a schematic flowchart of main steps of an OTA upgrade method according to an embodiment of the disclosure. As shown in FIG. 1, the OTA upgrade method in this embodiment of the disclosure mainly includes step S 101 to step S103 below.

In step S101, before an OTA upgrade operation is performed, current usages of all system resources are obtained.

In one embodiment, the obtaining current usages of system resources includes: obtaining current usages of a central processing unit (CPU), input/output (IO), a memory, and a network. Those skilled in the art can understand that in other embodiments of the disclosure, the obtaining current usages of system resources further includes obtaining usages of other system resources according to a requirement. The above examples do not constitute a limitation on the system resources.

In one implementation, the OTA upgrade operation is started after a vehicle electronic control unit (ECU) receives an OTA upgrade instruction from the cloud. In other implementations of the disclosure, the OTA upgrade operation may be alternatively started after the vehicle system itself sends an OTA upgrade request to a server or the cloud and receives an instruction fed back from the server or the cloud that the OTA upgrade can be performed.

In step S 102, an OTA service quota is allocated to each of the system resources based on the current usages of all the system resources.

Further, refer to FIG. 2. FIG. 2 is a schematic flowchart of main steps of an OTA service quota allocation method according to an embodiment of the disclosure. As shown in FIG. 2, the OTA service quota allocation method mainly includes step S201 and step S202 below.

In step S201, a percentage N of each of the system resources currently used by another service and a preset maximum use ratio L of each of the system resources are obtained.

In step S202, an OTA service quota M of each of the system resources is determined based on the percentage N of each of the system resources currently used by the another service and the maximum use ratio L.

Specifically, the determining an OTA service quota M of each of the system resources based on the percentage N of each of the system resources currently used by the another service and the maximum use ratio L includes:
determining a maximum value of the OTA service quota M of each of the system resources based on an absolute value of a difference between the percentage N of each of the system resources currently used by the another service and the maximum use ratio L, so that the OTA service quota M is less than or equal to the absolute value of the difference between the percentage N of each of the system resources currently used by the another service and the maximum use ratio L.

In one implementation, current percentages N1, N2, N3, and N4 of system resources CPU, IO, memory, and network used by other services are obtained; and preset maximum use ratios corresponding to the system resources are L 1, L2, L3, and L4. In order to ensure the smooth operation of the OTA upgrade operation and other services, the maximum use ratios corresponding to the system resources do not exceed 100%. In practical applications, the maximum use ratio of each of the system resources can be selected and set by those skilled in the art according to actual needs.

Further, OTA service quotas M1, M2, M3, and M4 are allocated to the system resources CPU, IO, memory, and network based on the percentages N1 to N4 of the system resources currently used by the another service and the maximum use ratio L1 to L4. It is assumed that M1 ≤ |L1-N1|, M2 ≤ |L2-N2|, M3 ≤ |L3-N3|, and M4 ≤ |L4-N4|.

Optionally, the OTA service quotas of the system resources may be determined simultaneously or sequentially.

Optionally, the allocating an OTA service quota to each of the system resources based on the current usages of all the system resources may be performed on the vehicle or the cloud.

In the technical solutions for implementing the disclosure, the OTA service quota of the system resource is determined based on the percentage of each of the system resources currently used by the another service and the maximum use ratio, so as to accurately control the percentage of system resources occupied by OTA upgrade, and further improve the reliability of vehicle OTA and the safety of vehicle traveling. After the above steps are completed, the following step S 103 continues to be performed.

In step S103, the OTA upgrade operation is performed, and when the OTA upgrade operation is performed, each of the system resources used in OTA upgrade is controlled to not exceed the corresponding OTA service quota.

In one embodiment, the method further includes: during the OTA upgrade operation, performing the following steps in a loop until the OTA upgrade is completed:
obtaining latest usages of all the system resources at an interval of a preset time t, re-allocating an OTA service quota to each of the system resources based on the latest usage of each of the system resources, and performing an OTA upgrade operation again based on the re-allocated OTA service quota.

In one implementation, the preset time t is 10s; the latest usages of all the system resources are obtained every preset 10s, and the latest usages include the percentage N currently used by the another service and the maximum use ratio L; and an OTA service quota is re-allocated to each of the system resources based on the latest usage of each of the system resources, and an OTA upgrade operation is performed again based on the re-allocated OTA service quota. Specifically, for the OTA service quota allocation method, reference may be made to the above implementations of the disclosure.

Further, the re-allocating an OTA service quota to each of the system resources based on the usage of each of the system resources includes:
when a percentage of each of the system resources used by another service increases, decreasing the OTA service quota of the system resource; and
when the percentage of the system resource used by the another service decreases, increasing the OTA service quota of the system resource.

Through the above step S 101 to step S103, the OTA upgrade operation is performed by obtaining the current usages of the system resources and allocating the OTA service quota to each of the system resources based on the current usages of the system resources. This ensures that when the OTA upgrade operation is performed, each of the system resources that is used does not exceed the corresponding OTA service quota, thereby preventing the OTA upgrade from affecting driving safety by occupying too many system resources, and preventing the OTA upgrade from affecting the upgrade speed by occupying too few system resources.

In the technical solutions for implementing the disclosure, the OTA service quota of each system resource is dynamically adjusted in a timely manner to ensure that when other services occupy a large number of system resources, the ratio of system resources occupied by the OTA upgrade is decreased and the safe traveling of the vehicle is ensured, and when other services occupy a small number of system resources, the ratio of system resources occupied by the OTA upgrade is increased, to improve the efficiency of the OTA upgrade, shorten the OTA upgrade cycle of the vehicle, improve the convenience of the OTA upgrade, and further improve the reliability of vehicle OTA and the safety of vehicle traveling.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Further, the disclosure further provides an OTA upgrade apparatus.

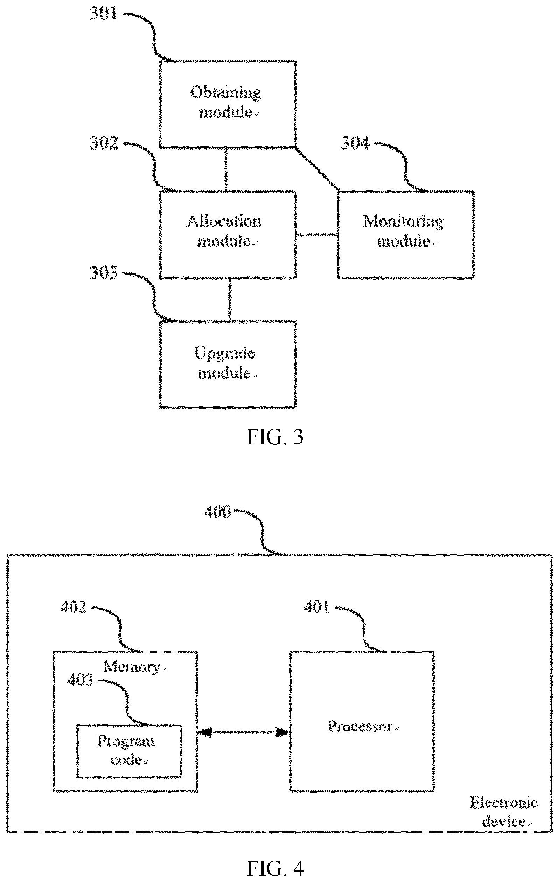

FIG. 3 is a block diagram of a main structure of an OTA upgrade apparatus according to an embodiment of the disclosure. As shown in FIG. 3, the OTA upgrade apparatus in this embodiment of the disclosure mainly includes an obtaining module 301, an allocation module 302, and an upgrade module 303. In some embodiments, one or more of the obtaining module 301, the allocation module 302, and the upgrade module 303 may be combined into one module. In some embodiments, the obtaining module 301 may be configured to: before an OTA upgrade operation is performed, obtain current usages of all system resources. The allocation module 302 may be configured to allocate an OTA service quota to each of the system resources based on the current usages of all the system resources. The upgrade module 303 may be configured to perform the OTA upgrade operation, and control each of the system resources used in OTA upgrade to not exceed the corresponding OTA service quota. In one implementation, for detailed description of function implementation, reference may be made to the description of step S 101 to step S103.

Further, in some embodiments, the OTA upgrade apparatus further includes a monitoring module 304. The monitoring module 304 may be configured to periodically check the latest usages of the system resources, and feed back the latest usages of the system resources to the allocation module 302, to re-allocate an OTA service quota. The monitoring module 304 obtains the latest usages of the system resources through the obtaining module 301. In one implementation, for detailed description of function implementation, reference may be made to the description of step S201 and step S202.

The OTA upgrade apparatus is used to implement the embodiments of the OTA upgrade method shown in FIG. 1 and FIG. 2. The technical principles of, technical problems solved by, and technical effects provided by the OTA upgrade apparatus and the OTA upgrade method are similar, and those skilled in the art can clearly understand that, for ease and simplicity of description, for a specific process and a related description of the OTA upgrade apparatus, reference may be made to the content described in the embodiments of the OTA upgrade method, which will not be repeated herein.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program code, which may be in a source code form, an object code form, an executable file form, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides an electronic device.

FIG. 4 is a block diagram of a main structure of an electronic device configured to perform an OTA upgrade method according to the disclosure. As shown in FIG. 4, in an electronic device embodiment according to the disclosure, an electronic device 400 includes a processor 401 and a memory 402. The storage apparatus 402 may be configured to store program code 403 for executing the OTA upgrade method of the above method embodiments. The processor 401 may be configured to execute the program code 403 in the memory 402, where the program code 403 includes but is not limited to program code for executing the OTA upgrade method of the above method embodiments. For ease of description, only parts related to the embodiments of the disclosure are shown. For specific technical details that are not disclosed, reference may be made to the method part of the embodiments of the disclosure.

Exemplarily, the processor 401 may be a central processing unit (CPU), or may be another general-purpose processor, a digital signal processor (DSP), an application specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

Exemplarily, the memory 402 may be an internal storage unit of the electronic device 400, for example, a hard disk or an internal memory of the electronic device 400. The memory 402 may be alternatively an external storage device of the electronic device 400, such as a plug-in hard disk, a smart media card (SMC), a secure digital (SD) card, or a flash card equipped on the electronic device 400. Further, the memory 402 may alternatively include both internal storage units of the electronic device 400 and external storage devices. The memory 402 is configured to store computer programs and other programs and data required by the electronic device 400. The memory 402 may be further configured to temporarily store data that has been output or is to be output.

Exemplarily, the program code 403 may be divided into one or more modules/units, and the one or more modules/units are stored in the memory 402 and executed by the processor 401 to implement the disclosure. The one or more modules/units may be a series of computer program instruction segments that can complete specific functions, and the instruction segments are used to describe execution processes of the program code 403 in the electronic device 400.

Exemplarily, the electronic device 400 may be a vehicle ECU, or may be an electronic device such as a desktop computer, a notebook computer, a palmtop computer, or a cloud server. The electronic device 400 may include, but is not limited to, the processor 401 and the memory 402. Those skilled in the art can understand that FIG. 4 shows only an example of the electronic device 400, does not constitute a limitation on the electronic device 400, and may include more or fewer components than shown, or combine some components, or include different components, for example, the electronic device may further include an input/output device, a network access device, a bus, etc.

Further, the disclosure further provides a computer-readable storage medium. In a computer-readable storage medium embodiment according to the disclosure, the computer-readable storage medium may be configured to store a program for performing the OTA upgrade method in the foregoing method embodiment, and the program may be loaded and executed by a processor to implement the foregoing OTA upgrade method. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, the disclosure further provides a vehicle including a vehicle body and the above electronic device.

Further, it should be understood that, because the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. An OTA upgrade method, comprising:
before an OTA upgrade operation is performed, obtaining current usages of all system resources;
allocating an OTA service quota to each of the system resources based on the current usages of all the system resources; and
performing the OTA upgrade operation, and when the OTA upgrade operation is performed, controlling each of the system resources used in OTA upgrade to not exceed the corresponding OTA service quota.

2. The method according to claim 1, wherein the method further comprises:
during the OTA upgrade operation, performing the following steps in a loop until the OTA upgrade is completed:
obtaining latest usages of all the system resources at an interval of a preset time t, re-allocating an OTA service quota to each of the system resources based on the latest usage of each of the system resources, and performing an OTA upgrade operation again based on the re-allocated OTA service quota.

3. The method according to claim 1, wherein the obtaining current usages of system resources comprises: obtaining current usages of a CPU, IO, a memory, and a network.

4. The method according to claim 1, wherein the allocating an OTA service quota to each of the system resources based on the current usages of all the system resources comprises:
obtaining a percentage N of each of the system resources currently used by another service and a preset maximum use ratio L of each of the system resources; and
determining an OTA service quota M of each of the system resources based on the percentage N of each of the system resources currently used by the another service and the maximum use ratio L.

5. The method according to claim 4, wherein the determining an OTA service quota M of each of the system resources based on the percentage N of each of the system resources currently used by the another service and the maximum use ratio L comprises:
determining a maximum value of the OTA service quota M of each of the system resources based on an absolute value of a difference between the percentage N of each of the system resources currently used by the another service and the maximum use ratio L, so that the OTA service quota M is less than or equal to the absolute value of the difference between the percentage N of each of the system resources currently used by the another service and the maximum use ratio L.

6. The method according to claim 2, wherein the re-allocating an OTA service quota to each of the system resources based on the usage of each of the system resources comprises:
when a percentage of each of the system resources used by another service increases, decreasing the OTA service quota of the system resource; and
when the percentage of each of the system resources used by another service decreases, increasing the OTA service quota of the system resource.

7. An OTA upgrade apparatus, comprising:
an obtaining module (301) configured to: before an OTA upgrade operation is performed, obtain current usages of all system resources;
an allocation module (302) configured to allocate an OTA service quota to each of the system resources based on the current usages of all the system resources; and
an upgrade module (303) configured to perform the OTA upgrade operation, and control each of the system resources used in OTA upgrade to not exceed the corresponding OTA service quota.

8. An electronic device (400), comprising a processor (401) and a memory (402), wherein the memory (402) is adapted to store a plurality of pieces of program code (403), and the pieces of program code (403) are adapted to be loaded and run by the processor (401) to perform an OTA upgrade method according to any one of claims 1 to 6.

9. A computer-readable storage medium storing a plurality of pieces of program code, wherein the pieces of program code are adapted to be loaded and run by a processor to perform an OTA upgrade method according to any one of claims 1 to 6.

10. A vehicle, comprising a vehicle body and an electronic device according to claim 8.
